# EUROPEAN PATENT SPECIFICATION

(11) **EP 2 581 980 B1**
(45) Date of publication and mention of the grant of the patent: **11.10.2017**
(21) Application number: 11792225.2
(22) Date of filing: 20.04.2011
(51) Int. Cl.: H01M 10/0568, H01M 10/052, H01M 10/0569, C01D 15/00, H01M 10/056

(54) **METHOD FOR PRODUCING ELECTROLYTE SOLUTION FOR LITHIUM ION BATTERY, AND LITHIUM ION BATTERY USING THE ELECTROLYTE SOLUTION**
VERFAHREN ZUR HERSTELLUNG EINER ELEKTROLYTLÖSUNG FÜR LITHIUMIONENBATTERIEN UND LITHIUMIONENBATTERIE MIT DER ELEKTROLYTLÖSUNG
PROCÉDÉ DE FABRICATION DE SOLUTION ÉLECTROLYTE POUR BATTERIE AU LITHIUM-ION, ET BATTERIE AU LITHIUM-ION ASSOCIÉE

(30) Priority: 08.06.2010 JP 2010130980
(43) Date of publication of application: 17.04.2013
(73) Proprietor: Central Glass Company, Limited, Yamaguchi 755-0001 (JP)
(72) Inventor: OE, Meguru, Ube-shi, Yamagucchi 755-001 (JP); SATO, Keiji, Ube-chi,Yamaguchi 755-001 (JP)
(74) Representative: Manitz Finsterwald Patentanwälte PartmbB
(86) International application number: PCT/JP2011/059700
(87) International publication number: WO 2011/155267

(56) References cited:
- EP-A1- 0 789 412
- EP-A1- 1 976 048
- WO-A1-2007/066464
- CA-A1- 2 259 985
- JP-A- 2000 211 907
- JP-A- 2004 175 659

## Description

### Technical Field

The present invention relates to a method for producing an electrolyte solution for a lithium ion battery with the use of lithium hexafluorophosphate as an electrolyte and to a lithium ion battery using the electrolyte solution.

### Background Art

In general, an electrolyte solution for a lithium ion battery is produced by preparing an electrolyte and dissolving the electrolyte in a given solvent.

There have been proposed various preparation methods of lithium hexafluorophosphate as an useful electrolyte for use in lithium ion batteries etc.

One preparation method is to prepare lithium hexafluorophosphate with the use of a solvent and, more specifically, to form lithium hexafluorophosphate by reaction of gaseous phosphorus pentafluoride with lithium fluoride dissolved in an anhydrous hydrogen fluoride solvent, and then, extract the lithium hexafluorophosphate by crystallization (see Non-Patent Document 1). In this preparation method, the reaction rate of the lithium hexafluorophosphate is high. It is however necessary to use a large amount of anhydrous hydrogen fluoride, which has a high vapor pressure, toxicity and corrosivity, as the solvent so that the handling of the solvent is not easy. It is also necessary to form the phosphorus pentachloride as the other raw material by a separate process from the lithium fluoride and to provide a process for crystallization of the lithium hexafluorophosphate. As mentioned above, there are many factors that lead to increase in cost.

Another preparation method is to prepare lithium hexafluorophosphate by reaction of solid lithium fluoride with gaseous phosphorus pentafluoride in the presence of no solvent (see Patent Document 1). In this preparation method, the reaction does not proceed to completion due to the formation of a coating film of reaction product on a surface of the lithium fluoride so that the lithium fluoride remains unreacted. Similarly, lithium hexafluorophosphate can be prepared by reaction of lithium fluoride and phosphorus pentafluoride with the addition of anhydrous hydrogen fluoride in the presence of no solvent (see Patent Document 2). In this preparation method, it is not easy to control the reaction and is necessary to perform the reaction under cooling at a temperature of several tens °C below freezing.

In still another preparation method, lithium hexafluorophosphate is prepared by reaction of lithium fluoride and phosphorus pentafluoride in an organic solvent (see Patent Document 3). This preparation method has a great advantage in terms of reaction control and purity, but still faces a cost problem due to the need to form and handle the phosphorus pentafluoride as the raw material by a separate process from the lithium fluoride.

In yet another preparation method, lithium hexafluorophosphate is prepared by reacting phosphorus trichloride with chlorine and hydrogen fluoride in an anhydrous hydrogen fluoride solvent or a polar organic solvent of CH₃CN to form phosphorus pentafluoride in a reactor, adding lithium fluoride into the reactor and thereby reacting the lithium fluoride with the phosphorus pentafluoride (see Patent Document 4). This preparation method is efficient as the formation of the phosphorus pentafluoride and the reaction of the phosphorus pentafluoride and the lithium fluoride are performed in the same reactor. There is however a need for expensive equipment such as pressure reactor and complicated process operations because of the high vapor pressure of the phosphorus pentafluoride. Further, it is basically necessary to provide a process for crystallization of the lithium hexafluorophosphate and is thus principally difficult to accomplish cost reduction in the production of an electrolyte solution. As mentioned above, there remains many problems in this preparation method.

Furthermore, it is feasible to produce an electrolyte solution for a lithium ion battery by reacting lithium chloride with phosphorus trichloride and chlorine in a non-aqueous organic solvent, reacting a reaction product generated in the solvent with hydrogen fluoride, and then, removing excessive hydrogen fluoride with the re-addition of lithium chloride (see Patent Document 5). By this production method, the lithium ion battery electrolyte solution containing the high-purity lithium hexafluorophosphate as the electrolyte can be obtained.
EP 1 976 048 A1 discloses a method for producing an electrolyte solution for lithium ion batteries, in which lithium hexafluorophosphate is used as an electrolyte, comprising the steps of (a) reacting phosphorus trichloride, chlorine and lithium chloride in a nonaqueous organic solvent and (b) reacting a reaction product of the step (a) formed in the solvent, with hydrogen fluoride.
CA 2,259,985 relates to a process for producing LiPF₆, wherein LiF is reacted with PCl₅ or PCl₃ at a temperature of -20 to 300 °C for a reaction time of 0.1 to 10 hours to give LiPF₆, and wherein LiPF₆ is isolated as a solution from the reaction mixture, using ether, nitrile, sulphone, carbonate, halogenated hydrocarbon and/or tertiary amines as the solubilizing agent.

### Prior Art Documents

### Patent Documents

Patent Document 1: Japanese Laid-Open Patent Publication No. S64-72901
Patent Document 2: Japanese Laid-Open Patent Publication No. H10-72207
Patent Document 3: Japanese Laid-Open Patent Publication No. H9-165210
Patent Document 4: Japanese Laid-Open Patent Publication No. H10-81505
Patent Document 5: Japanese Laid-Open Patent Publication No. 2007-184246

### Non-Patent Documents

Non-Patent Document 1: J. Chem. Soc., Part 4, 4408 (1963)

### Summary of the Invention

### Problems to be Solved by the Invention

In the method of Patent Document 5, there may occur a solid residue after the re-addition of the lithium chloride.

It is accordingly an object of the present invention to produce a lithium ion battery electrolyte solution containing lithium hexafluorophosphate as an electrolyte by reacting lithium chloride with phosphorus trichloride and chlorine in a non-aqueous organic solvent, reacting a reaction product generated in the solvent with hydrogen fluoride, and then, reacting unreacted hydrogen fluoride with lithium chloride, such that the electrolyte solution can be obtained at a lower cost through the effective use of the resulting residue and used in the lithium ion battery.

### Means for Solving the Problems

The present inventors have made extensive researches in view of the above problems and resultantly found that, in the case of producing a lithium ion battery electrolyte solution containing lithium hexafluorophosphate as an electrolyte by reacting lithium chloride with phosphorus trichloride and chlorine in a non-aqueous organic solvent, reacting a reaction product generated in the non-aqueous organic solvent with hydrogen fluoride, and then, reacting unreacted remaining hydrogen fluoride with lithium chloride, the resulting residue is a mixture of unreacted remaining lithium chloride and lithium fluoride generated during the reaction and can be used, without separation, as lithium chloride raw material. The present invention is based on the above finding.

According to one aspect of the present invention, there is provided a method for producing an electrolyte solution for a lithium ion battery, the electrolyte solution containing lithium hexafluorophosphate as an electrolyte, the method comprising: a first step of reacting lithium chloride with phosphorus trichloride and chlorine in a non-aqueous organic solvent;
a second step of reacting the reaction product generated in the first step with hydrogen fluoride; a third step of reacting the unreacted hydrogen fluoride remaining after the second step with lithium chloride; and a fourth step of separating the reaction solution obtained after the third step by filtration into a filtrate and a solid residue to yield the filtrate as the electrolyte solution for the lithium ion battery, wherein the solid residue separated in the fourth step, which is a mixture of unreacted remaining lithium chloride and lithium fluoride, is returned to the first step and used for reaction.

In the above production method, the non-aqueous organic solvent is preferably a chain or cyclic carbonic acid ester compound or an ether compound with two or more oxygen atoms. It is particularly preferable that the carbonic acid ester compound is at least one selected from the group consisting of dimethyl carbonate, diethyl carbonate, methyl ethyl carbonate, ethylene carbonate and propylene carbonate. Further, it is particularly preferable that the ether compound is 1,2-dimethoxyethane.

The electrolyte solution produced by the above production method may be used in a lithium ion battery.

The lithium ion battery electrolyte solution containing lithium hexafluorophosphate as the electrolyte is produced by reacting lithium chloride with phosphorus trichloride and chlorine in the non-aqueous organic solvent, reacting a reaction product generated in the solvent with hydrogen fluoride and then reacting unreacted remaining hydrogen fluoride with lithium chloride while using the resulting residue as production raw material. It is therefore possible according to the present invention to accomplish reduction in production cost.

### Detailed Description of the Embodiments

The present invention will be described in detail below.

A production method of a lithium ion battery electrolyte solution according to the present invention includes a first step of reacting lithium chloride with phosphorus trichloride and chlorine in a non-aqueous organic solvent; a second step of reacting the reaction product generated in the first step with hydrogen fluoride; a third step of reacting the unreacted hydrogen fluoride remaining after the second step with lithium chloride; and a fourth step of separating the reaction solution obtained after the third step by filtration into a filtrate and a solid residue to yield the filtrate as the electrolyte solution for the lithium ion battery, wherein the solid residue separated in the fourth step, which is a mixture of unreacted remaining lithium chloride and lithium fluoride, is returned to the first step and used for reaction.
Namely, the present production method can be performed as follows. Raw materials such as lithium chloride and phosphorus trichloride are first put into a non-aqueous organic solvent, followed by blowing thereinto chlorine gas. With this, reaction takes place between lithium chloride, phosphorus trichloride and chlorine in the non-aqueous organic solvent. Hydrogen fluoride is subsequently introduced into the non-aqueous organic solvent and reacted with the reaction product in the non-aqueous organic solvent.
Lithium chloride is again added into the non-aqueous organic solvent and reacted with unreacted remaining hydrogen fluoride in the non-aqueous organic solvent. The thus-obtained reaction solution is separated by filtration into a filtrate and a solid residue. The filtrate is used as the electrolyte solution. On the other hand, the solid residue is reused as lithium chloride raw material for reaction with phosphorus trichloride and chlorine in a non-aqueous organic solvent. The reaction product in the solvent is reacted with hydrogen fluoride, followed by reacting unreacted remaining hydrogen fluoride with lithium chloride.

The non-aqueous organic solvent used in the present production method is preferably either a chain or cyclic carbonic ester compound or an ether compound with two or more oxygen atoms, each of which has high chemical stability and high solubility of lithium hexafluorophosphate. Specific examples of the non-aqueous organic solvent are: chain carbonic ester compounds such as dimethyl carbonate, diethyl carbonate and methyl ethyl carbonate: cyclic carbonic ester compounds such as ethylene carbonate, propylene carbonate and butylene carbonate; chain ether compounds such as γ-butyrolactone, γ-valerolactone, 1,2-dimethoxyethane and diethyl ether; and cyclic ether compounds such as tetrahydrofuran, 2-methyltetrahydrofuran and dioxane. Among others, dimethyl carbonate, diethyl carbonate, methyl ethyl carbonate, ethylene carbonate, propylene carbonate and 1,2-dimethoxyethane are preferred in terms of high dielectric constant and high acid resistance. The above non-aqueous solvents can be used solely or in the form of a mixture of two or more thereof.

In the first step, the mole ratio of the lithium chloride, chlorine and phosphorus trichloride is in a range of 1 to 1.1:1:1 to 2. It is necessary to use the phosphorus trichloride in an amount larger than or equal to the chlorine gas. If the amount of the chlorine gas is larger than the amount of the phosphorus trichloride, excessive chlorine gas reacts with the solvent to generate an impurity. For this reason, the mole amount of the phosphorus trichloride is one to two times larger than that of the chlorine gas. The mole amount of the lithium chloride is 1 to 1.1 times larger, preferably 1.0 to 1.1 times larger, than that of the chlorine gas in terms of raw material cost.

With regard to the amount of the raw material used relative to the non-aqueous organic solvent, it is necessary to use the lithium chloride in an amount of 400 g or less, preferably 100 g or less, per 1 liter of the non-aqueous organic solvent. If the amount of the lithium chloride exceeds 400 g relative to 1 liter of the non-aqueous organic solvent, the reaction product becomes saturated so that the reaction does not proceed in the presence of unreacted excessive lithium chloride.

In the first step, the lower limit of the reaction temperature is generally -40°C, preferably 5°C; and the upper limit of the reaction temperature is generally 100°C, preferably 50°C. If the reaction temperature is lower than -40°C, the reaction does not proceed due to solidification of the non-aqueous organic solvent. If the reaction temperature is higher than 100°C, there unfavorably occurs coloring or side reaction.

The reaction pressure is not particularly limited in the first step. The reaction is typically performed at or around atmospheric pressure, without the need to use a special pressure-resistant reactor, as that the reaction quickly proceeds 100% and does not generate a gas component.

There is a possibility that, if light is irradiated during the reaction, the non-aqueous organic solvent may be reacted with the chlorine. It is thus preferable to perform the reaction under light-shielded conditions.

In the first step, after the completion of introduction of the chlorine gas, the whole or part of the lithium chloride powder in the reactor is dissolved and reacted to form an intermediate compound, which is assumed to be lithium hexachlorophosphate, as indicated in the following reaction scheme (1).

LiCl + PCl₃ + Cl₂ → LiPCl₆ (1)

In the second step, the above-formed lithium hexachlorophosphate is fluorinated upon introduction of the anhydrous hydrogen fluoride into the reactor. At this time, the anhydrous hydrogen fluoride can be in gaseous form or liquid form. The target compound, i.e., lithium hexafluorophosphate is obtained as indicated in the following reaction scheme (2).

LiPCl₆ + 6HF → LiPF₆ + 6HCl (2)

It is necessary that the mole amount of the anhydrous hydrogen fluoride introduced is 6.01 times or more than the total mole amount of the intermediate compound, i.e, lithium hexachlorophosphate and excessive phosphorus trichloride remaining after the preceding reaction step. If the amount of the anhydrous hydrogen fluoride is smaller than or equal to the total amount of the lithium hexachlorophosphate and excessive phosphorus trichloride, the fluorination of the lithium hexachlorophosphate does not proceed sufficiently. As a result, the concentration of chlorine in the solution becomes high due to the generation of lithium fluorochlorophosphate as a partially-fluorinated product or the presence of remaining excessive phosphorus trichloride. This can cause an adverse effect on lithium battery performance. When the mole amount of the anhydrous hydrogen fluoride is 6.01 times or more than the total mole amount of the lithium hexachlorophosphate and excessive phosphorus trichloride, the reaction proceeds properly so as to completely fluorinate the lithium hexachlorophosphate to lithium hexafluorophosphate and to convert the excessive phosphorus trichloride to phosphorus trifluoride. The phosphorus trifluoride has a high vapor pressure and thus can be easily removed by decompression etc. in the subsequent step. For this reason, it is necessary to use the anhydrous hydrogen fluoride in an amount larger than or equal to the total amount of the lithium hexachlorophosphate and excessive phosphorus trichloride. The amount of the anhydrous hydrogen fluoride is preferably 6.01 to 7.20 times larger than the total amount of the lithium hexachlorophosphate and excessive phosphorus trichloride in terms of raw material cost.

In the second step, the lower limit of the reaction temperature is generally -40°C, preferably 5°C; and the upper limit of the reaction temperature is generally 100°C, preferably 50°C. If the reaction temperature is lower than -40°C, the reaction does not proceed due to solidification of the non-aqueous organic solvent. If the reaction temperature is higher than 100°C, there unfavorably occurs coloring or side reaction.

The reaction pressure is not particularly limited in the second step. The reaction is typically performed at or around atmospheric pressure in order to remove by-produced hydrogen chloride.

From the thus-obtained non-aqueous organic solution of the lithium hexafluorophosphate, the by-products such as hydrogen chloride and phosphorus trifluoride and the excessively introduced hydrogen fluoride can be removed by decompression, bubbling, distillation etc.

In the third step, the excessive hydrogen fluoride is converted to hydrogen chloride upon the re-addition of lithium chloride as indicated in the following reaction scheme (3). The hydrogen chloride has a high vapor pressure and thus can be removed by decompression, bubbling, distillation etc.

HF + LiCl → LiF + HCl (3)

The lithium chloride is re-added in this step in an equivalent mole amount to the hydrogen fluoride to be removed or in an amount necessary for the subsequent reaction step.

After the removal of the hydrogen chloride, the reaction solution is filtered and thereby separated into the filtrate and the solid residue in the fourth step.

There is no particular limitation on the technique of filtration of the reaction solution as long as the reaction solution can be separated by filtration into the solid and liquid phases. It is feasible to separate the reaction solution into the filtrate and the solid residue by any filtration technique such as suction filtration under reduced pressure, pressure filtration or cross-flow filtration or by any ordinary means such as centrifugal separation.

The separated filtrate can be used as the lithium ion battery electrolyte solution in which the high-purity lithium hexafluorophosphate electrolyte is dissolved.

The separated solid residue is returned to the first step, put together with phosphorus trichloride into the non-aqueous organic solvent and, upon introduction of chlorine gas into the non-aqueous organic solvent, reacted with the phosphorus trichloride and chlorine. Hydrogen fluoride is subsequently introduced into the solvent and reacted with the reaction product in the solvent. In this way, the electrolyte solution of the lithium hexafluorophosphate is obtained.

It is feasible to subject the resulting lithium hexafluorophosphate solution to crystallization process such as cooling or condensation and thereby obtain a crystal of the lithium hexafluorophosphate. In the present invention, however, it is possible that the obtained reaction solution can be directly used as material of the lithium ion battery electrolyte solution, without extracting the lithium hexafluorophosphate as the solid by crystallization process, as the non-aqueous organic solvent used in the reaction steps is applicable as a lithium ion battery solvent. It is also possible to obtain the electrolyte solution with high purity by the re-addition of lithium chloride as a purifying agent and possible to make cost reduction by the use of the unreacted lithium chloride and the reaction product as raw material.

A lithium ion battery may be characterized in that the lithium ion battery uses the lithium ion battery electrolyte solution obtained by the above production method. The other structural parts can be those commonly used for lithium ion batteries. Namely, the lithium ion battery has positive and negative electrodes capable of absorbing and desorbing lithium, a separator, a package and the like.

The negative electrode includes at least a negative electrode material and a collector. The positive electrode includes at least a positive electrode material and a collector.

The collector is in the form of e.g. a conductive sheet of metal, carbon material or conductive polymer so as to allow transfer of electrons from or to the positive electrode material or negative electrode material. For instance, the positive and negative electrode collectors can be of aluminum foil and copper foil, respectively.

There is no particular limitation on the negative electrode material. Specific examples of the negative electrode material are those capable of absorbing and desorbing lithium, such as lithium metal, alloys or intermetallic compounds of lithium and a different metal or metals, carbon materials, synthetic or natural graphites, metal oxides, metal nitrides, activated carbons and conductive polymers.

There is also no particular limitation on the positive electrode material. Specific examples of the negative electrode material are: lithium-containing transition metal composite oxides such as LiCoO₂, LiNiO₂ LiMnO₂ LiMn₂O₄ those in which a plurality of transition metals are contained and those in which a part of transition metal has been replaced with a different metal or metals; lithium-containing transition metal phosphates such as LiFePO₄, LiMnPO₄, those in which a plurality of transition metals are contained and those in which a part of transition metal has been replaced with a different metal or metals; oxides such as TiO₂, V₂O₅ and MoO₃; sulfides such as TiS₂ and FeS; conductive polymers such as polyacethylene, polyparaphenylene, polyaniline and polypyrrole; activated carbon; radical-generating polymers; and carbon materials.

Each of the positive and negative electrode materials can be easily formed into a sheet shape with the addition of acetylene black, ketchen black, carbon fiber or graphite as a conductive agent and polytetrafluoroethylene, polyvinylidene fluoride or SBR resin as a binder.

The separator is in the form of e.g. a nonwoven fabric or porous sheet of polypropylene, polyethylene, paper, glass fiber or the like so as to prevent contact between the positive and negative electrodes.

The lithium ion battery can be provided in coin form, cylindrical form, aluminum laminate form etc. by assembling the above battery structural parts.

### Examples

The present invention will be described in more detail below by way of the following examples. It should be noted that the following examples are illustrative and are not intended to limit the present invention thereto.

### [Example 1]

In a polytetrafluoroethylene reactor, 500 g of methyl ethyl carbonate, 72 g of phosphorus trichloride and 21 g of lithium chloride were placed and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

After that, excessive hydrogen fluoride in the reaction solution was converted to hydrogen chloride and lithium fluoride by the re-addition of 21 g of lithium chloride and removed together with the reaction by-products such as hydrogen chloride and phosphorus trichloride by decompression.

When the thus-obtained solution was analyzed by NMR, there was seen no decomposition of methyl ethyl carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

The solution was separated by pressure filtration into a filtrate and a residue. The concentration of the acidic impurity, which could cause an adverse effect on lithium battery performance, in the filtrate was 15 ppm. The concentration of the lithium hexafluorophosphate in the filtrate was 105 ppm in terms of solid content.

The whole of the filtration residue, 500 g of methyl ethyl carbonate and 72 g of phosphorus trichloride were placed in a polytetrafluoroethylene reactor and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

When the thus-obtained solution was analyzed by NMR, there was seen no decomposition of methyl ethyl carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

### [Example 2]

In a polytetrafluoroethylene reactor, 500 g of dimethyl carbonate, 72 g of phosphorus trichloride and 21 g of lithium chloride were placed and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

After that, excessive hydrogen fluoride in the reaction solution was converted to hydrogen chloride and lithium fluoride by the re-addition of 21 g of lithium chloride and removed together with the reaction by-products such as hydrogen chloride and phosphorus trichloride by decompression.

When the thus-obtained solution was analyzed by NMR, there was seen no decomposition of dimethyl carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

The solution was separated by pressure filtration into a filtrate and a residue. The concentration of the acidic impurity, which could cause an adverse effect on lithium ion battery performance, in the filtrate was 15 ppm. The concentration of the lithium hexafluorophosphate in the filtrate was 105 ppm in terms of solid content.

The whole of the filtration residue, 500 g of dimethyl carbonate and 72 g of phosphorus trichloride were placed in a polytetrafluoroethylene reactor and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

When the thus-obtained solution was analyzed by NMR, there was seen no decomposition of methyl ethyl carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

### [Example 3]

In a polytetrafluoroethylene reactor, 200 g of dimethyl carbonate, 300 g of diethyl carbonate, 72 g of phosphorus trichloride and 21 g of lithium chloride were placed and dispersed by stirring. The polytetrafluoroethylene reactor herein used was of the light-shielded type. While maintaining the dispersion liquid at 10°C, 35.5 g of chlorine gas was introduced into the dispersion liquid. The dispersion medium after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

After that, excessive hydrogen fluoride in the reaction solution was converted to hydrogen chloride and lithium fluoride by the re-addition of 21 g of lithium chloride and removed together with the reaction by-products such as hydrogen chloride and phosphorus trichloride by decompression.

When the thus-obtained solution was analyzed by NMR, there was seen no decomposition of dimethyl carbonate and diethyl carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

The solution was separated by pressure filtration into a filtrate and a residue. The concentration of the acidic impurity, which could cause an adverse effect on lithium ion battery performance, in the filtrate was 15 ppm. The concentration of the lithium hexafluorophosphate in the filtrate was 105 ppm in terms of solid content.

The whole of the filtration residue, 500 g of dimethyl carbonate and 72 g of phosphorus trichloride were placed in a polytetrafluoroethylene reactor and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

When the thus-obtained solution was analyzed by NMR, there was seen no decomposition of dimethyl carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

### [Example 4]

In a polytetrafluoroethylene reactor, 500 g of diethyl carbonate, 72 g of phosphorus trichloride and 21 g of lithium chloride were placed and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

After that, excessive hydrogen fluoride in the reaction solution was converted to hydrogen chloride and lithium fluoride by the re-addition of 21 g of lithium chloride and removed together with the reaction by-products such as hydrogen chloride and phosphorus trichloride by decompression.

When the thus-obtained solution was analyzed by NMR, there was seen no decomposition of diethyl carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

The solution was separated by pressure filtration into a filtrate and a residue. The concentration of the acidic impurity, which could cause an adverse effect on lithium ion battery performance, in the filtrate was 15 ppm. The concentration of the lithium hexafluorophosphate in the filtrate was 105 ppm in terms of solid content.

The whole of the filtration residue, 500 g of dimethyl carbonate and 72 g of phosphorus trichloride were placed in a polytetrafluoroethylene reactor and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

When the thus-obtained solution was analyzed by NMR, there was seen no decomposition of diethyl carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

### [Example 5]

In a polytetrafluoroethylene reactor, 500 g of 1,2-dimethoxyethane, 72 g of phosphorus trichloride and 21 g of lithium chloride were placed and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

After that, excessive hydrogen fluoride in the reaction solution was converted to hydrogen chloride and lithium fluoride by the re-addition of 21 g of lithium chloride and removed together with the reaction by-products such as hydrogen chloride and phosphorus trichloride by decompression.

When the thus-obtained solution was analyzed by NMR, there was seen no decomposition of 1,2-dimethoxyethane etc. whereby the reaction product was only lithium hexafluorophosphate. It was confirmed by the NMR analysis results that: the amount of the lithium hexafluorophosphate in the solution was 75 g; and the yield of the reaction was nearly 100%.

The solution was separated by pressure filtration into a filtrate and a residue. The concentration of the acidic impurity, which could cause an adverse effect on lithium ion battery performance, in the filtrate was 10 ppm. The concentration of the lithium hexafluorophosphate in the filtrate was 80 ppm in terms of solid content.

The whole of the filtration residue, 500 g of 1,2-dimethoxyethane and 72 g of phosphorus trichloride were placed in a polytetrafluoroethylene reactor and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

When the thus-obtained solution was analyzed by NMR, there was seen no decomposition of 1,2-dimethoxyethane etc. whereby the reaction product was only lithium hexafluorophosphate. It was confirmed by the NMR analysis results that: the amount of the lithium hexafluorophosphate in the solution was 75 g; and the yield of the reaction was nearly 100%.

### [Example 6]

In a polytetrafluoroethylene reactor, 500 g of propylene carbonate, 72 g of phosphorus trichloride and 21 g of lithium chloride were placed and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

After that, excessive hydrogen fluoride in the reaction solution was converted to hydrogen chloride and lithium fluoride by the re-addition of 21 g of lithium chloride and removed together with the reaction by-products such as hydrogen chloride and phosphorus trichloride by decompression.

When the thus-obtained solution was analyzed by NMR, there was seen no decomposition of propylene carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

The solution was separated by pressure filtration into a filtrate and a residue. The concentration of the acidic impurity, which could cause an adverse effect on lithium ion battery performance, in the filtrate was 20 ppm. The concentration of the lithium hexafluorophosphate in the filtrate was 145 ppm in terms of solid content.

The whole of the filtration residue, 500 g of propylene carbonate and 72 g of phosphorus trichloride were placed in a polytetrafluoroethylene reactor and dispersed by stirring. The polytetrafluoroethylene reactor herein used was of the light-shielded type. While maintaining the dispersion liquid at 10°C, 35.5 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 66 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

When the thus-obtained solution was analyzed by NMR, there was seen no decomposition of propylene carbonate etc. whereby the reaction product was only lithium hexafluorophosphate. It was confirmed by the NMR analysis results that: the amount of the lithium hexafluorophosphate in the solution was 75 g; and the yield of the reaction was nearly 100%.

### [Example 7]

In a polytetrafluoroethylene reactor, 1000 g of methyl ethyl carbonate, 144 g of phosphorus trichloride and 42 g of lithium chloride were placed and dispersed by stirring. The polytetrafluoroethylene reactor herein used was of the light-shielded type. While maintaining the dispersion liquid at 10°C, 71.0 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 132 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

After that, excessive hydrogen fluoride in the reaction solution was converted to hydrogen chloride and lithium fluoride by the re-addition of 42 g of lithium chloride and removed together with the reaction by-products such as hydrogen chloride and phosphorus trichloride by decompression.

When the thus-obtained solution was analyzed by NMR, there was seen no decomposition of methyl ethyl carbonate etc. whereby the reaction product was only lithium hexafluorophosphate. It was confirmed by the NMR analysis results that: the amount of the lithium hexafluorophosphate in the solution was 150 g; and the yield of the reaction was nearly 100%.

The solution was separated by pressure filtration into a filtrate and a residue. The concentration of the acidic impurity, which could cause an adverse effect on lithium ion battery performance, in the filtrate was 12 ppm. The concentration of the lithium hexafluorophosphate in the filtrate was 84 ppm in terms of solid content.

The whole of the filtration residue, 1000 g of dimethyl carbonate and 144 g of phosphorus trichloride were placed in a polytetrafluoroethylene reactor and dispersed by stirring. The polytetrafluoroethylene reactor herein used was of the light-shielded type. While maintaining the dispersion liquid at 10°C, 71.0 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 140 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

Excessive hydrogen fluoride in the reaction solution was converted to hydrogen chloride and lithium fluoride by the re-addition of lithium chloride and removed together with the reaction by-products such as hydrogen chloride and phosphorus trichloride by decompression.

When the thus-obtained solution was analyzed by NMR, there was seen no decomposition of dimethyl carbonate etc. whereby the reaction product was only lithium hexafluorophosphate. It was confirmed by the NMR analysis results that: the amount of the lithium hexafluorophosphate in the solution was 150 g; and the yield of the reaction was nearly 100%. The concentration of the acidic impurity, which could cause an adverse effect on lithium ion battery performance, in the solution was 15 ppm. The concentration of the lithium hexafluorophosphate in the solution was 112 ppm in terms of solid content.

### [Example 8]

In a PFA-coated SUS reactor, 5000 g of methyl ethyl carbonate, 1334 g of phosphorus trichloride and 424 g of lithium chloride were placed and dispersed by stirring. While maintaining the dispersion liquid at 10°C, 710 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 1320 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

After that, excessive hydrogen fluoride in the reaction solution was converted to hydrogen chloride and lithium fluoride by the re-addition of 424 g of lithium chloride and removed together with the reaction by-products such as hydrogen chloride and phosphorus trichloride by decompression.

When the thus-obtained solution was analyzed by NMR, there was seen no decomposition of methyl ethyl carbonate etc. whereby the reaction product was only lithium hexafluorophosphate. It was confirmed by the NMR analysis results that: the amount of the lithium hexafluorophosphate in the solution was 1510 g; and the yield of the reaction was nearly 100%.

The solution was separated by cross-flow filtration into a filtrate and a residue. The filtrate was placed into a polytetrafluoroethylene reactor. The concentration of the acidic impurity, which could cause an adverse effect on lithium ion battery performance, in the filtrate was 16 ppm. The concentration of the lithium hexafluorophosphate in the filtrate was 110 ppm in terms of solid content.

The whole of the filtration residue was left in the PFA-coated SUS reactor. In this reactor, 5000 g of methyl ethyl carbonate and 1334 g of phosphorus trichloride were placed and dispersed with the filtration residue by stirring. While maintaining the dispersion liquid at 10°C, 710 g of chlorine gas was introduced into the dispersion liquid. The dispersion liquid after the completion of introduction of the chlorine gas was in the form of a pale yellow solution by dissolution of the solid matter. Lithium hexachlorophosphate was generated with the progress of the reaction.

Into this reaction solution, 1340 g of anhydrous hydrogen fluoride was introduced at 10°C. The reaction solution after the completion of introduction of the anhydrous hydrogen fluoride changed from pale yellow color to colorless. With the progress of the reaction, lithium hexafluorophosphate was generated.

Excessive hydrogen fluoride in the reaction solution was converted to hydrogen chloride and lithium fluoride by the re-addition of lithium chloride and removed together with the reaction by-products such as hydrogen chloride and phosphorus trichloride by decompression.

When the thus-obtained solution was analyzed by NMR, there was seen no decomposition of methyl ethyl carbonate etc. whereby the reaction product was only lithium hexafluorophosphate. It was confirmed by the NMR analysis results that: the amount of the lithium hexafluorophosphate in the solution was 1510 g; and the yield of the reaction was nearly 100%. The concentration of the acidic impurity, which could cause an adverse effect on lithium ion battery performance, in the solution was 15 ppm. The concentration of the lithium hexafluorophosphate in the solution was 105 ppm in terms of solid content.

Using the above-obtained solution, a test cell was produced and tested for the electrolyte solution performance by charge/discharge test as follows. First, the lithium hexafluorophosphate/methyl ethyl carbonate solution separated as the filtrate was concentrated so that the concentration of the lithium hexafluorophosphate was nearly doubled. Ethylene carbonate was added to the concentrated solution at a volume ratio of methyl ethyl carbonate:ethylene carbonate = 2:1. There was thus obtained a 1 mol/L electrolyte solution of lithium hexaluoforphosphate in the mixed solvent of methyl ethyl carbonate and ethylene carbonate.

The test cell was assembled from this electrolyte solution and negative and positive electrodes. The negative and positive electrodes used were those using graphite and lithium cobalt oxide, respectively. More specifically, the negative electrode was formed by mixing 95 parts by mass of natural graphite powder with 5 parts by mass of polyvinylidene fluoride (PVDF) as a binder, adding N,N-dimethylformamide to the graphite mixture, applying the resulting slurry to a nickel mesh sheet, and then, drying the applied slurry at 150°C for 12 hours. The positive electrode was formed by mixing 85 parts by mass of lithium cobalt oxide with 10 parts by mass of graphite powder and 5 parts by mass of PVDF, adding N,N-dimethylformamide to the lithium cobalt oxide mixture, applying the resulting slurry to an aluminum foil sheet, and then, drying the applied slurry at 150°C for 12 hours. Further, a polypropylene nonwoven fabric was provided as a separator. The above electrolyte solution, the negative and positive electrodes and the separator were assembled into the test cell. The test cell was then subjected to charge/discharge test. The charge/discharge test was carried out by repeated cycles of charging the test cell to 4.2 V at 0.35 mA/cm² and discharging the test cell to 2.5 V at 0.35 mA/cm². In the charge/discharge test, a change in the capacity retention of the test cell was observed.

The charge/discharge efficiency of the test cell was nearly 100%. There was no change in the capacity retention of the test cycle before and after 100 cycles of charging and discharging.

Furthermore, the lithium hexafluorophosphate/methyl ethyl carbonate solution prepared using the filtration residue separated by filtration was concentrated so that the concentration of the lithium hexafluorophosphate was nearly doubled. Ethylene carbonate was added to the concentrated solution at a volume ratio of methyl ethyl carbonate:ethylene carbonate = 2:1. There was thus obtained a 1 mol/L electrolyte solution of lithium hexaluoforphosphate in the mixed solvent of methyl ethyl carbonate and ethylene carbonate. Using the obtained electrolyte solution, a test cell was produced and tested for the electrolyte solution performance by charge/discharge test in the same manner as above.

The charge/discharge efficiency of the test cell was nearly 100%. There was no change in the capacity retention of the test cycle before and after 100 cycles of charging and discharging.

Although the present invention has been described with reference to the above embodiments, various modifications and variations of the above embodiments can be made based on the knowledge of those skilled in the art without departing from the scope of the present invention as defined in the appended claims.

## Claims

1. A method for producing an electrolyte solution for a lithium ion battery, the electrolyte solution containing lithium hexafluorophosphate as an electrolyte, the method comprising:
a first step of reacting lithium chloride with phosphorus trichloride and chlorine in a non-aqueous organic solvent;
a second step of reacting the reaction product generated in the first step with hydrogen fluoride;
a third step of reacting the unreacted hydrogen fluoride remaining after the second step with lithium chloride; and
a fourth step of separating the reaction solution obtained after the third step by filtration into a filtrate and a solid residue to yield the filtrate as the electrolyte solution for the lithium ion battery, **characterized in that** the solid residue separated in the fourth step, which is a mixture of unreacted remaining lithium chloride and lithium fluoride, is returned to the first step and used for reaction.

2. The method for producing the electrolyte solution for the lithium ion battery according to claim 1, wherein the non-aqueous organic solvent is either a chain or cyclic carbonic ester compound or an ether compound with two or more oxygen atoms

3. The method for producing the electrolyte solution for the lithium ion battery according to claim 2, wherein the carbonic ester compound is at least one selected from the group consisting of dimethyl carbonate, diethyl carbonate, methyl ethyl carbonate, ethylene carbonate and propylene carbonate.

4. The method for producing the electrolyte solution for the lithium ion battery according to claim 2, wherein the ether compound is 1,2-dimethoxyethane.

## Patentansprüche

1. Verfahren zum Herstellen einer Elektrolytlösung für eine Lithium-Ionen-Batterie, wobei die Elektrolytlösung Lithiumhexafluorphosphat als einen Elektrolyten enthält, wobei das Verfahren umfasst:
einen ersten Schritt eines Reagierens von Lithiumchlorid mit Phosphortrichlorid und Chlor in einem nichtwässrigen organischen Lösungsmittel;
einen zweiten Schritt eines Reagierens des in dem ersten Schritt erzeugten Reaktionsprodukts mit Fluorwasserstoff;
einen dritten Schritt eines Reagierens des nicht reagierten Fluorwasserstoffs, der nach dem zweiten Schritt verbleibt, mit Lithiumchlorid; und
einen vierten Schritt eines Trennens der nach dem dritten Schritt erhaltenen Reaktionslösung durch Filtration in ein Filtrat und einen festen Rückstand, um das Filtrat als die Elektrolytlösung für die Lithium-Ionen-Batterie zu gewinnen,
**dadurch gekennzeichnet, dass**
der in dem vierten Schritt abgetrennte feste Rückstand, welcher eine Mischung aus nicht reagiertem verbleibendem Lithiumchlorid und Lithiumfluorid ist, zu dem ersten Schritt zurückgeführt und zur Reaktion verwendet wird.

2. Verfahren zum Herstellen der Elektrolytlösung für die Lithium-Ionen-Batterie nach Anspruch 1, wobei das nichtwässrige organische Lösungsmittel entweder eine als Kette ausgebildete oder eine zyklische Kohlensäureesterverbindung oder eine Etherverbindung mit zwei oder mehr Sauerstoffatomen ist.

3. Verfahren zum Herstellen der Elektrolytlösung für die Lithium-Ionen-Batterie nach Anspruch 2, wobei die Carbonsäureesterverbindung zumindest eine ist, die aus der Gruppe ausgewählt wird, die aus Dimethylcarbonat, Diethylcarbonat, Methylethylcarbonat, Ethylencarbonat und Propylencarbonat besteht.

4. Verfahren zum Herstellen der Elektrolytlösung für die Lithium-Ionen-Batterie nach Anspruch 2, wobei die Etherverbindung 1,2-Dimethoxyethan ist.

## Revendications

1. Procédé pour produire une solution électrolyte pour une batterie lithium-ions, la solution électrolyte contenant à titre d'électrolyte de l'hexafluorophosphate de lithium, le procédé comprenant :
une première étape consistant à faire réagir du chlorure de lithium avec du chlorure de phosphore et du chlore dans un solvant organique non aqueux
une seconde étape consistant à faire réagir le produit de réaction généré dans la première étape avec du fluorure d'hydrogène ;
une troisième étape consistant à faire réagir le fluorure d'hydrogène restant qui n'a pas réagi après la seconde étape avec du chlorure de lithium ; et
une quatrième étape consistant à séparer la solution de réaction obtenue après la troisième étape par filtration pour donner un filtrat et un résidu solide pour produire le filtrat à titre de solution électrolyte pour la batterie lithium-ions,
**caractérisé en ce que**
le résidu solide séparé dans la quatrième étape, qui est un mélange de chlorure de lithium et de fluorure de lithium restants qui n'ont pas réagi, est renvoyé à la première étape et utilisé pour la réaction.

2. Procédé pour produire la solution électrolyte pour la batterie lithium-ion selon la revendication 1, dans lequel le solvant organique non aqueux est soit un composé ester carbonique en chaîne ou cyclique, soit un composé éther avec deux ou plusieurs atomes d'oxygène.

3. Procédé pour produire la solution électrolyte pour la batterie lithium-ion selon la revendication 2, dans lequel le composé ester carbonique est au moins un composé sélectionné parmi le groupe comprenant carbonate diméthyle, carbonate diéthyle, carbonate méthyle éthyle, carbonate éthylène et carbonate propylène.

4. Procédé pour produire la solution électrolyte pour la batterie lithium-ion selon la revendication 2, dans lequel le composant éther est du 1,2-diméthoxyéthane.
